# EUROPÄISCHE PATENTSCHRIFT

(11) **EP 2 329 579 B1**
(45) Veröffentlichungstag und Bekanntmachung des Hinweises auf die Patenterteilung: **18.07.2018**
(21) Anmeldenummer: 09781044.4
(22) Anmeldetag: 24.07.2009
(51) Int. Cl.: H02H 3/14, H02H 9/04, B60M 5/02

(54) **VORRICHTUNG UND VERFAHREN ZUR BEGRENZUNG DES SCHIENENPOTENZIALS BEI EINER GLEICHSTROMBAHN**
DEVICE AND METHOD FOR LIMITING THE RAIL POTENTIAL IN A DC RAILWAY
PROCÉDÉ ET DISPOSITIF POUR LIMITER LE POTENTIEL DES RAILS D'UNE VOIE FERRÉE À COURANT CONTINU

(30) Priorität: 30.09.2008 DE 102008049705
(43) Veröffentlichungstag der Anmeldung: 08.06.2011
(73) Patentinhaber: Siemens Aktiengesellschaft, 80333 München (DE)
(72) Erfinder: HEIN, Gerd, 91074 Herzogenaurach (DE); KUDEREWSKI, Georg, 91301 Forchheim (DE)
(86) Internationale Anmeldenummer: PCT/EP2009/059570
(87) Internationale Veröffentlichungsnummer: WO 2010/037579

(56) Entgegenhaltungen:
- CA-C- 1 307 822
- DE-A1- 3 614 589
- DE-A1- 4 402 023
- US-B1- 6 707 171

## Beschreibung

Die Erfindung betrifft eine Vorrichtung zur Begrenzung des Schienenpotenzials bei einer Gleichstrombahn, wobei eine niederohmige Verbindungsleitung zwischen der Schiene und der Bauwerkserde angeordnet ist und wobei in die Verbindungsleitung ein Schaltgerät eingebunden ist, das über eine Steuerleitung mit einem zwischen der Schiene und der Bauwerkserde angeordneten Spannungsmesser in Verbindung steht.

Bei einer Gleichstrombahn darf das elektrische Potenzial der Schiene einen vorgegebenen Höchstwert nicht überschreiten, um zu gewährleisten, dass ein Berühren der Schiene für Personen ungefährlich ist. Es ist daher schon vorgeschlagen worden, wenn die Spannung zwischen der Schiene und der Bauwerkserde einen Schwellwert überschreitet, eine leitende Verbindung zwischen der Schiene und der Bauwerkserde über ein mechanisches Schaltgerät, das ein so genannter Kurzschließer ist, zu schalten. Sobald die Spannung dann den Schwellwert wieder unterschritten hat, unterbricht das Schaltgerät die Verbindungsleitung. Erst bei einem erneuten Anstieg der Spannung über den Schwellwert hinaus wird die Verbindungsleitung erneut geschlossen. Ein zu hohes Schienenpotenzial wird dabei nicht immer zuverlässig erkannt. Beispiele dafür sind aus CA 1,307,822 und US 7,707,171 bekannt. Der Erfindung liegt die Aufgabe zugrunde, eine Vorrichtung zur Begrenzung des Schienenpotenzials bei einer Gleichstrombahn anzugeben, die zuverlässiger als es bisher möglich war, ein für Personen gefährliches hohes Schienenpotenzial zur Bauwerkserde hin ableiten.

Die Aufgabe, eine geeignete Vorrichtung anzugeben, wird gemäß der Erfindung dadurch gelöst, dass das Schaltgerät einen Thyristor aufweist, mit dessen Zündeingang der Spannungsmesser in Verbindung steht, und dass in die Verbindungsleitung ein Stromstärkemesser eingebunden ist, der über eine Steuereinheit mit dem Zündeingang des Thyristors in Verbindung steht, die, bis der Wert der Stromstärke einen Schwellwert unterschritten hat, den Thyristor laufend neu zündet.
Es wird der Vorteil erzielt, dass laufend die Stromstärke in der Verbindungsleitung gemessen und nach jeder Messung bei Überschreiten eines Sollwertes der Thyristor neu gezündet wird, so dass das gefährliche Schienenpotenzial vollständig zur Bauwerkserde abgeleitet werden kann. Nachdem der Thyristor zuerst durch ein Signal vom Spannungsmesser her gezündet worden ist, wird in einer laufenden Folge aus Messungen der Stromstärke in der Verbindungsleitung und Zündungen des Thyristors ein Stromfluss von der Schiene zur Bauwerkserde so lange aufrecht erhalten, bis ein Sollwert der Stromstärke eindeutig unterschritten ist.
Beispielsweise steht die Steuereinheit mit einem Schütz in Verbindung, der Bestandteil des Schaltgerätes ist. Der Schütz ist zum Beispiel parallel zum Thyristor geschaltet und bei geschlossenem Schütz ist die Schiene mit der Bauwerkserde verbunden. Der Schütz, der mit einem Schalter vergleichbar ist, wird beispielsweise dann geschlossen, wenn in der Steuereinheit Zündimpulse für den Thyristor ausgelöst werden.
Der Stromstärkemesser ist beispielsweise ein an einem Widerstand angeschlossener Spannungsmesser, ein LEM-Wandler und/oder ein Hallsensor. Ferner wird die Aufgabe, ein geeignetes Verfahren zur Begrenzung des Schienenpotenzials bei einer Gleichstrombahn mit der Vorrichtung nach der Erfindung anzugeben, dadurch gelöst, dass, wenn die Spannung zwischen der Schiene und der Bauwerkserde einen Schwellwert überschreitet, der Thyristor gezündet wird, der dadurch Strom leitet, und dass - solange die Stromstärke in der Verbindungsleitung einen Schwellwert überschreitet der Thyristor laufend neu gezündet wird.
Damit wird der Vorteil erzielt, dass nicht nur aufgrund einer erhöhten Spannung zwischen der Schiene und der Bauwerkserde, sondern davon ausgehend so lange wie eine zu hohe Stromstärke in der Verbindungsleitung vorhanden ist, das Schaltgerät geschlossen ist und dadurch das zu hohe Schienenpotenzial abgebaut wird. Vorteilhaft wird laufend die Stromstärke in der Verbindungsleitung gemessen und bei einem Überschreiten eines Sollwertes wird der Thyristor gezündet, bevor dann erneut die Stromstärke gemessen wird und solange abwechselnd mit dem Zünden des Thyristors und der Messung der Stromstärke fortgefahren wird, bis die Stromstärke unter dem Schwellwert liegt. Damit wird vorteilhaft ein zuverlässiger und einfacher Abbau des Schienenpotenzials bewirkt.
Beispielsweise bleibt, solange der Thyristor gezündet wird, der Schütz geschlossen, so dass die Verbindungsleitung leitend ist. Dadurch wird in besonderer Weise sichergestellt, dass, solange die Stromstärke über dem Schwellwert liegt, eine leitende Verbindung zwischen der Schiene und der Bauwerkserde gewährleistet ist.

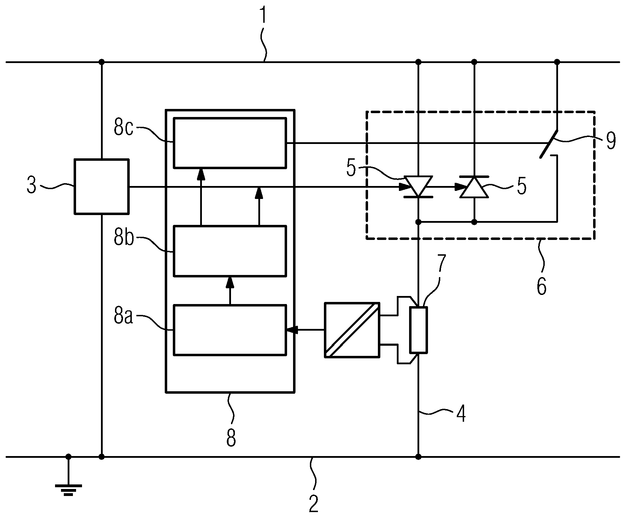

Die Vorrichtung zur Begrenzung des Schienenpotenzials bei einer Gleichstrombahn werden anhand der Zeichnung näher erläutert:
Die Zeichnung zeigt grob schematisch ein Schaltbild für eine solche Vorrichtung.
Zwischen einer Schiene 1 einer Gleichstrombahn und der Bauwerkserde 2 befindet sich ein Spannungsmesser 3, in dem auch festgestellt wird, ob die gemessene Spannung einen Schwellwert überschreitet. In diesem Fall wird eine Verbindungsleitung 4 zwischen der Schiene 1 und der Bauwerkserde 2 durch Ansteuern eines in ihr angeordneten Thyristors 5, der Bestandteil eines Schaltgerätes 6 ist, vom Spannungsmesser 3 aus durchlässig geschaltet. Dadurch wird das gefährliche, zu hohe Schienenpotenzial beseitigt.
Zur Verbesserung der Vorrichtung ist in die Verbindungsleitung 4 ein Stromstärkemesser 7 eingebunden, der mit einer Steuereinheit 8 in Verbindung steht. Dort wird in einer Vergleichseinheit 8a untersucht, ob die gemessene Stromstärke einen Schwellwert übersteigt. Wenn das gegeben ist, wird über einen Zünder 8b der Thyristor 5 angesteuert. Es wird dadurch eine erneute Stromstärkemessung ermöglicht. Durch eine Abfolge von Stromstärkemessungen und Zündungen des Thyristors 5 wird zuverlässig erst dann die Ableitung des Schienenpotenzials beendet, wenn die Stromstärke den Schwellwert unterschritten hat. Solange der Thyristor 5 angesteuert oder gezündet wird, hält die Steuereinheit 8 mit einer Schließeinheit 8c ein Schütz 9, das als Bestandteil des Schaltgerätes 6 parallel zum Thyristor 5 in der Verbindungsleitung 4 angeordnet ist, geschlossen. Dadurch wird auch auf diesem Weg das gefährliche hohe Schienenpotenzial zur Bauwerkserde 2 abgeleitet.

Mit der Vorrichtung zur Begrenzung des Schienenpotenzials wird der Vorteil erzielt, dass durch eine Abfolge von Stromstärkemessungen und Zündungen des Thyristors 5 eine zu frühe Unterbrechung der leitenden Verbindung über die Verbindungsleitung 4, die von der Schiene 1 zur Bauwerkserde 2 führt, ausgeschlossen ist.

## Patentansprüche

1. Vorrichtung zur Begrenzung des Schienenpotenzials bei einer Gleichstrombahn, umfassend
- eine zwischen der Schiene (1) und der Bauwerkserde (2) angeordnete, niederohmige Verbindungsleitung (4),
- einen zwischen der Schiene (1) und der Bauwerkserde (2) angeordneten Spannungsmesser (3) zur Messung der Spannung zwischen Schiene (1) und Bauwerkserde (2) und zum Vergleichen der gemessenen Spannung mit einem Schwellwert,
- ein in die Verbindungsleitung (4) eingebundenes Schaltgerät (6), das über eine Steuerleitung mit dem Spannungsmesser (3) in Verbindung steht und einen Thyristor (5) aufweist, mit dessen Zündeingang der Spannungsmesser (3) in Verbindung steht,
- eine Steuereinheit (8), die dazu ausgebildet ist, den Thyristor (5) bei Überschreiten des Spannungsschwellwertes durchlässig zu schalten, und
- einen in die Verbindungsleitung (4) eingebundenen Stromstärkemesser (7),
**dadurch gekennzeichnet,**
- **dass** der Stromstärkemesser (7) über die Steuereinheit (8) mit dem Zündeingang des Thyristors (5) in Verbindung steht,
- **dass** die Steuereinheit (8) eine Vergleichseinheit (8a) zum Vergleichen der gemessenen Stromstärke mit einem Schwellwert aufweist und dazu ausgebildet ist, den Thyristor (5) mittels eines Zünders (8b) laufend neu zu zünden, bis der Wert der Stromstärke den Schwellwert unterschritten hat,
- **dass** das Schaltgerät (6) einen parallel zum Thyristor (5) angeordneten Schütz (9) aufweist, mit dem die Steuereinheit (8) in Verbindung steht, und
- **dass** die Steuereinheit (8) eine Schließeinheit (8c) aufweist und dazu ausgebildet ist, den Schütz (9) geschlossen zu halten, solange der Thyristor (5) gezündet wird.

2. Vorrichtung nach Anspruche 1,
- wobei der Stromstärkemesser (7) ein an einem Widerstand angeschlossener Spannungsmesser, ein LEM-Wandler und/oder ein Hallsensor ist.

## Claims

1. Device for limiting the rail potential in a DC railway, comprising
- a low-impedance connection line (4) arranged between the rail (1) and the ground (2) below the structure,
- a voltmeter (3) arranged between the rail (1) and the ground (2) below the structure for measuring the voltage between the rail (1) and the ground (2) below the structure and for comparing the measured voltage to a threshold value,
- a switchgear (6) which is incorporated into the connection line (4) and is connected to the voltmeter (3) via a control line and has a thyristor (5), to the triggering input of which the voltmeter (3) is connected,
- a control unit (8) which is designed permeably to switch the thyristor (5) when the voltage threshold value has been exceeded, and
- an ammeter (7) incorporated into the connection line (4),
**characterised in that**
- the ammeter (7) is connected to the triggering input of the thyristor (5) via the control unit (8),
- the control unit (8) has a comparison unit (8a) for comparing the measured current intensity to a threshold value and is designed to keep retriggering the thyristor (5) by means of a trigger (8b) until the value of the current intensity has dropped below the threshold value,
- the switchgear (6) has a contactor (9) which is arranged parallel to the thyristor (5) and to which the control unit (8) is connected, and
- the control unit (8) has a closing unit (8c) and is designed to keep the contactor (9) closed for as long as the thyristor (5) is triggered.

2. Device according to claim 1,
- wherein the ammeter (7) is a voltmeter connected to a resistor, an LEM transformer and/or a Hall sensor.

## Revendications

1. Dispositif de limitation du potentiel des rails d'une voie à courant continu, comprenant
- une ligne (4) de liaison à petite valeur ohmique, disposée entre le rail (1) et la terre (2) d'ouvrage,
- un mesureur (3) de tension, monté entre le rail (1) et la terre (2) d'ouvrage, pour mesurer la tension entre le rail (1) et la terre (2) d'ouvrage et pour comparer la tension mesurée à une valeur de seuil,
- un appareil (6) de commutation, qui est incorporé dans la ligne (4) de liaison, qui est en liaison avec le mesureur (3) de tension par une ligne de commande et qui a un thyristor (5) avec l'entrée d'amorçage duquel le mesureur (3) de tension est en liaison,
- une unité (8) de commande, qui est constituée pour rendre le thyristor (5) passant lorsque la valeur de seuil de tension est dépassée et
- un mesureur (7) de l'intensité du courant, incorporé dans la ligne (4) de liaison,
**caractérisé**
- **en ce que** le mesureur (7) de l'intensité du courant est en liaison avec l'entrée d'amorçage du thyristor (5) par l'intermédiaire de l'unité (8) de commande,
- **en ce que** l'unité (8) de commande a une unité (8a) de comparaison pour comparer l'intensité du courant mesuré à une valeur de seuil et est constituée pour amorcer à nouveau, en continu, le thyristor (5) au moyen d'un amorceur (8b) jusqu'à ce que la valeur de l'intensité du courant soit inférieure à la valeur de seuil,*
- **en ce que** l'appareil (6) de commutation a un contacteur (9), qui est monté en parallèle au thyristor (5) et avec lequel l'unité (8) de commande est en liaison et
- **en ce que** l'unité (8) de commande a une unité (8c) de fermeture et est constituée pour maintenir le contacteur (9) fermé tant que le thyristor (5) est amorcé.

2. Dispositif suivant la revendication 1,
- dans lequel le mesureur (7) d'intensité du courant est un mesureur de tension raccordé à une résistance, un convertisseur LEM et/ou un détecteur de Hall.
